(19) Europäisches Patentamt

European Patent Office

Office européen des brevets

(11) Publication number: **0 605 938 A1**

## EUROPEAN PATENT APPLICATION

(12)

(21) Application number: 93300071.3

(22) Date of filing: 06.01.93

(51) Int. Cl.⁵: **B32B 27/20**, B32B 27/32

(43) Date of publication of application:
13.07.94 Bulletin 94/28

(84) Designated Contracting States:
**AT BE CH DE DK ES FR GB GR IE IT LI LU MC NL PT SE**

(71) Applicant: **COSMO FILMS LIMITED**
**30 Community Centre**
**Saket, New Delhi 110017(IN)**

(72) Inventor: **Mannar, S. Mannar**
**Plot No. 159,**
**N-1 'B' Sector**
**Cidco, Aurangabad 431 003(IN)**

(74) Representative: **Rickard, Timothy Mark Adrian**
**Brookes & Martin,**
**High Holborn House,**
**52/54 High Holborn**
**London WC1V 6SE (GB)**

(54) Synthetic paper and a process for making it.

㊿ The present invention relates to synthetic paper and to a process therefor. The synthetic paper has suitable writability and printing properties and comprises a extruded core layer and a first extruded skin layer atleast on one side thereof. The core layer is formed of polypropylene, calcium carbonate and titanium dioxide. The first skin layer is formed of homo copolymer of styrene, polypropylene and/or modified polypropylene, calcium carbonate, titanium dioxide and copolymer and/or ter polymers of ethylene. The first skin layer may be provided on both sides of said core layer. Alternatively, the skin layer on the opposite side may comprise a co-extruded layer of copolymer of propylene. In accordance with another embodiment a coated layer is provided on said first skin layer.

EP 0 605 938 A1

## FIELD OF INVENTION

This invention relates to synthetic paper and to a process for the preparation thereof.

## PRIOR ART

The use of biaxially oriented polypropylene films is known for packaging applications, and particularly, where protection against ingress of moisture is required. Thus, such films have a useful application for packing of edible produces, such as potato wafers. However, a disadvantage associated with such known films is that it is not receptive to ordinary ball point pen inks, pencil and water based inks and letter press and off set printing inks. Further, such films or sheets have a high tear initiation resistance and low tear propagation resistance.

A synthetic paper known in the art has been described in EP Specification No.70784. The process consists in coating both sides of a biaxially oriented polypropylene film of thickness 10-30 microns with a coating consisting of an opacifying filler, namely, titanium dioxide, calcium carbonate as a printability filler, styrene-acrylic latex as a binder, and melamine formaldehyde and urea formaldehyde as a thermosettable resin. Yet another synthetic paper known in the art is described in Japanese Patent specification (No. 7997473) comprising a single layer blended in an extruder and formed into a film by inflation process or through T-die. Such a film is then subjected to the step of mono or biaxial orientation by stenter process. Specifically, the film is formed from a mixture of olefin resin combined with other thermoplastic resin and calcium carbonate.

Reference made herein to a biaxial orientation is intended to imply biaxial orientation by, for example, the stenter process.

Yet another synthetic paper has been described in (JP No.6986846) and comprises of two or more layers and, wherein, the surface layer is a mixture of two or more thermoplastic resins and the inner layer is a thermoplastic resin. One of the resin mixtures for the surface layer suggested by the aforesaid patent is polypropylene and polystyrene.

A further synthetic paper has been suggested in (BP No.1330510) and comprises a single layer formed from a mixture of polystyrene, polypropylene, kaolin, titanium dioxide and diatomaceous earth. Such a mix is extruded and oriented in both directions.

Yet another synthetic paper has been suggested in (BP No.1268823) and which comprises in forming a thermoplastic layer of polystyrene which may contain a filler, orienting said layer, coating the layer with an unoriented polymer to form a sheet and then subjecting the sheet to the step of orientation.

## OBJECTS OF THE INVENTION

A primary object of this invention is to propose a synthetic paper capable of receiving inks, such as ball point pen inks, letter press and off set printing inks and as well as pencil writings thereon.

Another object of this invention is to propose a synthetic paper having suitable writability and printing properties.

Yet another object of this invention is to propose a synthetic paper having suitable mechanical strength, dimensional stability and required opacity.

## DESCRIPTION OF THE INVENTION

According to this invention there is provided a process for the preparation of synthetic paper comprising in the steps of forming said sheet by co extruding a core layer with a skin layer at least on one side of said core layer, said core layer formed from a mix comprising polypropylene, calcium carbonate, titanium dioxide, said skin layer formed from a mix comprising homo or copolymers of styrene, polypropylene and/or modified polypropylene, calcium carbonate, titanium dioxide, and copolymer or terpolymer of ethylene, singularly or in any combination, subjecting the extruded sheet to the step of biaxial orientation so as to form voids on said sheet and simultaneously imparting mechanical strength and dimensional stability to the paper.

Further according to this invention there is provided a synthetic paper comprising a sheet formed from a coextruded core layer and at least one skin layer provided on at least one side of said core layer, said core layer comprising polypropylene, calcium carbonate, titanium dioxide, said skin comprising homo or copolymer of styrene, polypropylene and/or modified polypropylene, calcium carbonate, titanium dioxide and copolymer or terpolymer of ethylene singularly or in any combination.

The process of the present invention consists in forming synthetic paper cmprising a core layer and a skin layer at least on one side of said core layer formed by the step of coextrusion and distinct to the step of lamination or bonding of a layer to the core.

In accordance with this invention the core layer comprises essentially of unmodified polypropylene, and present preferably in the amount of 80 to 95% by weight of the core. Polypropylene forms the basic constituent of the core which imparts the required strength to paper and, simultaneously, has a low density.

The core layer also includes calcium carbonate present in the amount of 2 to 15% by weight of core. It is generally known and recognized in the art that calcium carbonate is employed as a filler. However, in distinction, calcium carbonate used in the core layer of the present invention functions as an opacifying agent and as a means for reducing the density. As described subsequently herein, the coextruded layers of the core and skin are subjected to the step of biaxial orientation. The presence of calcium carbonate in the core layer imparts the formation of voids. Such voids firstly provides a reduction in the density. Secondly, such voids improve the opacity as it allows the light rays to be defracted. If calcium carbonate is present in an amount of less then 2% by weight of the core, then the amount of void formation would be reduced and, thereby, affecting the density of paper and opacifying properties. If calcium carbonate is present in an amount of more than 15% by weight of the core, then the mechanical strength of paper would be reduced due to an excessive presence of such voids and, further, there would be difficulty in processing.

The core layer also comprises titanium dioxide present in an amount of 2 to 7% by weight of core. Titanium dioxide functions as an opacifying agent. If, titanium dioxide is present in an amount of less than 2% by weight of the core, the opacifying properties of the core are affected. If titanium dioxide is present in an amount of more than 7% by weight of the core, then the density would increase.

The core layer may also include trace amounts of an antistatic agent, such as ethoxylated tertiary amine. The antistatic agent is present in the amount of 0 to 0.3% by weight of the core.

The mix for the skin layer is first prepared and then introduced into a second extruder, and such that the core and outer layer is co-extruded. The skin layer comprises 25 to 50% by weight of homo or copolymer of styrene based on the total weight of the skin layer or layers. Though reference is subsequently made herein to polystyrene, such a reference is also intended to include the copolymers of styrene. The presence of polystyrene in the skin layer mix provides the properties relating to ink receptivity. Furthermore, when the paper is subjected to the step of orientation, the presence of polystyrene allows the skin layer to crack and thereby form voids, and more particularly as polystyrene is not compatible with polypropylene. It would be apparent that the use of a thermoplastic polymer having a compatibility to polypropylene would probably not impart such properties. Further, the presence of polystyrene imparts the necessary roughness and stiffness to the skin layer. If more than 50% by weight of polystyrene is present in the skin layer, then the process ability would reduce. If less then 25% by weight of polystyrene is present in the skin layer, then the writability and printability properties are reduced, and further the required voids or cracks would then not be formed on the skin during the step of orientation.

The skin further contains between 5 to 15% by weight of polypropylene and/or modified polypropylene. As described hereinabove, polystyrene is not compatible to the core layer comprising essentially of polypropylene and/or modified polypropylene. Accordingly, the bonding of the coextruded skin layer to the core layer is facilitated through polypropylene and/or modified polypropylene present in the skin layer. If more than 15% by weight of polypropylene and/or modified polypropylene is present in the mix, then the printability and writability of the paper is reduced. Simultaneously, if the mix contains less than 5% by weight of polypropylene and/or modified polypropylene then the bonding to the core layer is reduced.

The mix further contains 7 to 20% by weight of copolymer and/or ter polymers of ethylene, such as ethylene vinyl acetate. Though reference is made hereinafter to ethylene vinyl acetate, it is to be understood that such a reference includes other copolymers and terpolymers of ethylene. Ethylene vinyl acetate is a high polar material and improves the printability properties of synthetic paper. Further EVA present in the skin layer assists in the bonding of the skin to the core layer. EVA is present in the amount of 7 to 20% by weight of skin. If more then 20% by weight of EVA is present in the skin, the stiffness properties and processability decreases.

The skin layer further contains calcium carbonate and present in the amount of 15 to 35% by weight of skin layer. Calcium carbonate and polystyrene together assist in imparting roughness or mat properties to the surface. Calcium carbonate further provides the opacity and assists in drying of ink. Finally, calcium carbonate functions as a void formation agent when the coextruded layers are subjected to the step of orientation. Due to the formation of such voids on the skin layer, an anchorage of ink is facilitated. However, a greater amount of void formation the core is desired in comparison to that of the skin layer. If less than 15% by weight of calcium carbonate is present in the skin then the properties of the paper are adversely affected. However, if calcium carbonate is present in an amount greater than 35% by weight of skin, the printability properties are affected as it would hinder the transfer of ink to the layer. Further, the processability is affected. As applicable with the core layer, calcium carbonate does not function as the normal application of a filler.

The skin layer further comprises titanium dioxide and present in the amount of 1 to 5% by weight of the skin layer. Titanium dioxide functions as an opacifying agent and, further, assists in preventing crack formation.

As described hereinabove, the skin layer may be provided on one or both sides of the core layer. Normally, the skin layer is provided only on one side of the core layer in instances where the synthetic paper is used for lamination application. The ratio of the skin to core layer thickness is 1:4 to 1:15. The skin has a substantial thickness, but within the aforesaid ratio, in instances where the skin layer is provided on both sides of the core layer.

The skin layer and the core layer subjected to the step of coextrusion. The coextruded sheet is then subjected to the step of biaxial orientation. The step of biaxial orientation improves the mechanical and barrier properties and known as such in the art. However, the step of biaxial orientation also assists in the formation of voids. Such voids are formed as calcium carbonate and polystyrene are not completely compatible with polypropylene. The orientation along the longitudinal axis is effected at 110 to 140°C and along the transverse axis at 160 to 200°C.

The biaxial oriented sheet is finally subjected to a corona treatment to improve surface tension of the skin layers.

Reference is made hereinabove to a synthetic paper having the structure of AB or ABA. In accordance with yet another embodiment of this invention the synthetic paper could have a structure of ABC. In such an embodiment, layer C is also a skin layer but which imparts heat sealable properties and which said properties are not present in skin layer A. Skin layer C is formed from a copolymer of propylene and is co extruded with core B and skin layer A.

In accordance with yet another embodiment the synthetic paper may be of stationery grade and comprise a further coated layer D provided on skin layer A. However, layer D is not a co extruded layer. Coating layer D comprises a copolymer of styrene and maleic anhydride and present in the amount of 25 to 60% by weight of the coating mixture, 20 to 60% by weight of silica and 0 to 2% by weight of carboxy methyl cellulose and 5 to 20% by weight of cross linking agents such as formaldehyde or polyhydroxy compounds or polyamines. Such a coating is receptive to water based and other inks. Such a coating is applied by normal paper coating techniques.

Reference is now made to the working examples herein, and which illustrate only an exemplary embodiment and without intending to imply any limitation on the scope of the invention.

% by weight

| CORE: | EXAMPLE 1 | EXAMPLE 2 | EXAMPLE 3 | EXAMPLE 4 | EXAMPLE 5 |
|---|---|---|---|---|---|
| PP | 91.45 | 91.45 | 91.45 | 91.45 | 91.45 |
| $CaCo_3$ (PP) | 3.90 | 3.90 | 3.90 | 3.90 | 3.90 |
| $TiO_2$ (PP) | 4.40 | 4.40 | 4.40 | 4.40 | 4.40 |
| AS (PP) | 0.25 | 0.25 | 0.25 | 0.25 | 0.25 |
| TOTAL: | 100.0 | 100.0 | 100.0 | 100.0 | 100.0 |

| SKIN: | | | | | |
|---|---|---|---|---|---|
| PS | 45.0 | 0.0 | 0.0 | 0.0 | 0.0 |
| $CaCO_3$ | 25.2 | 25.2 | 23.1 | 23.1 | 23.1 |
| EVA | 15.0 | 15.0 | 13.6 | 13.6 | 13.6 |
| $TiO_2$ | 2.0 | 2.0 | 1.8 | 1.8 | 1.8 |
| PP | 12.8 | 12.8 | 11.7 | 11.7 | 11.7 |
| Styrene acrylonitrile | - | 45.0 | 41.0 | 40.0 | 40.0 |
| Maleic anhydride grafted polypropylene | - | - | 9.1 | - | - |
| ethylene butyl acrylate maleic anhydride | - | - | - | 10.0 | - |
| ethylene ethylacrylate maleic anhydride | - | - | - | - | 10.0 |
| TOTAL: | 100.0 | 100.0 | 100.3 | 100.2 | 100.2 |

EP 0 605 938 A1

| STANDARD CMP-III | |
|---|---|
| Properties | |
| Apperancee | Opaque |
| Avg.thickness (Micron)<br>Avg. GSM (g/m$^2$) | 44<br>35 |
| Tensile strength (kg/sq.cm) (min) | MD: 700<br>TD: 1200 |
| Elongation (%) (max) | MD: 125<br>TD: 50 |
| Shrinkage (%) (125°C, 30 mins.) | MD: 5.0<br>TD: 5.0 |
| Transparency (%)<br>Opacity (%) (Min)<br>Gloss (45°C)<br>Whiteness Index<br>Wettability (dynes/cm)<br>Stiffness (N/15 mm) | 5.0<br>70<br>10<br>80<br>48<br>1100 |
| Elmendorf tear Propagation Strength (gm) | MD: 5.0<br>TD: 3.0 |

The following numbered paragraphs set out features of some embodiments of the invention.

1. Synthetic paper comprising a sheet formed from a co-extruded core layer and a skin layer atleast on one side thereof, said core layer comprising polypropylene, calcium carbonate, and titanium dioxide, said skin layer comprising homo or copolymer of styrene, polypropylene and/or modified polypropylene, calcium carbonate, titanium dioxide and copolymer and/or ter polymers of ethylene.

2. Synthetic paper according to paragraph 1, wherein said core layer comprises polypropylene present in the amount of 80 to 95% by wt. of the core, calcium carbonate present in the amount of 2-15% and titanium dioxide present in the amount of 2-7% by wt.

3. Synthetic paper according to paragraph 1, comprising an antistatic agent such as ethoxylated tertiary amines present in the amount of 0 to 0.3% by wt. of the core.

4. Synthetic paper according to paragraph 1, wherein said skin layer provided at least on one side of said core layer comprises homo or copolymer of styrenes and present in the amount of 25 to 50% by wt. of the skin layer or layers, polypropylene and/or modified polypropylene present in the amount of 5 to 15% by wt., copolymer and/or ter polymer of ethylene present in the amount of 7 to 20% by wt., calcium carbonate present in the amount of 15 to 35% by wt. and titanium dioxide present in the amount of 1-5% by wt.

5. Synthetic paper according to paragraph 1, wherein the ratio of the skin layer or layers to the core layers is 1:4 to 1:15.

6. Synthetic paper according to paragraph 4, wherein said skin layer on the opposite side co-extruded layer of copolymer of propylene.

7. Synthetic paper according to paragraph 4, comprising a coated layer on said co-extruded layer, said coated layer comprising a copolymer of styrene and maleic anhydride, silica and carboxymethyl cellulose.

8. Synthetic paper according to paragraph 7, comprising said copolymer of styrene and maleic anhydride present in the amount of 10 to 30% by wt. of the coated layer, silica present in the amount of 5 to 20% by wt. and carboxymethyl cellulose present in the amount of 1 to 5% by wt.

9. A process for the preparation of synthetic paper comprising in the steps of forming said sheets by co-extruding a core layer with a skin layer on atleast one side of said core layer, said core layer formed from a mix comprising polypropylene calcium carbonate and titanium dioxide, said skin layer formed from a mix comprising homo or copolymers of styrene, polypropylene and/or modified polypropylene, calcium carbonate, titanium dioxide, and copolymer or ter polymer of ethylene singularly or in any combination subjecting the extruded sheet to the step of biaxial orientation so as to form voids on said sheet and simultaneously imparting mechanical strength and dimensional stability to the paper.

10. A process according to paragraph 9, wherein said core layer comprises polypropylene present in the amount of 80 to 95% by wt. of the core, calcium carbonate present in the amount of 7-15% and titanium dioxide present in the amount of 2-7% by wt.

11. A process according to paragraph 9, comprising an antistatic agent such as ethoxylated tertiary amines present in the amount of 0 to 0.3% by wt. of the core.

12. A process according to paragraph 9, wherein said skin layer provided at least on one side of said core layer comprises homo or copolymer of styrenes and present in the amount of 25 to 50% by wt. of the skin layer or layers, polypropylene and/or modified polypropylene present in the amount of 5 to 15% by wt., copolymer and/or ter polymer of ethylene present in the amount of 7 to 20% by wt., calcium carbonate present in the amount of 15 to 35% by wt. and titanium dioxide present in the amount of 1-5% by wt.

13. A process according to paragraph 9, wherein the ratio of the skin layer or layers to the core layer is 1:4 to 1:15.

14. A process according to paragraph 12, wherein said skin layer on the opposite side comprises a co-extruded layer of copolymer of propylene.

15. A process according to paragraph 12, comprising a coated layer on said co-extruded layer, said coated layer comprising a copolymer of styrene and maleic anhydride, silica and carboxymethyl cellulose and formaldehyde or polyhydroxy compound or polyamine.

16. A process according to paragraph 15, comprising said copolymer of styrene and maleic anhydride present in the amount of 25 to 60% by wt. of the coated layer, silica present in the amount of 20 to 60% by wt., and carboxymethyl cellulose present in the amount of 0 to 2% by wt. and formaldehyde or polyhydroxy compound or polyamine present in the amount of 5 to 20% by weight.

## Claims

1. Synthetic paper comprising a sheet formed from a co-extruded core layer and a skin layer at least on one side thereof, said core layer comprising polypropylene, calcium carbonate, and titanium dioxide, said skin layer comprising homo or copolymer of styrene, polypropylene and/or modified polypropylene, calcium carbonate, titanium dioxide and copolymer and/or ter polymers of ethylene.

2. Synthetic paper as claimed in claim 1, wherein said core layer comprises polypropylene present in the amount of 80 to 95% by wt. of the core, calcium carbonate present in the amount of 2-15% and titanium dioxide present in the amount of 2-7% by wt.

3. Synthetic paper as claimed in claim 1, comprising an antistatic agent such as ethoxylated tertiary amines present in the amount of 0 to 0.3% by wt. of the core.

4. Synthetic paper as claimed in claim 1, wherein said skin layer provided at least on one side of said core layer comprises homo or copolymer of styrenes and present in the amount of 25 to 50% by wt. of the skin layer or layers, polypropylene and/or modified polypropylene present in the amount of 5 to 15% by wt., copolymer and/or ter polymer of ethylene present in the amount of 7 to 20% by wt., calcium carbonate present in the amount of 15 to 35% by wt. and titanium dioxide present in the amount of 1-5% by wt.

5. Synthetic paper as claimed in claim 1, wherein the ratio of the skin layer or layers to the core layers is 1:4 to 1:15.

6. Synthetic paper as claimed in claim 4, wherein said skin layer on the opposite side co-extruded layer of copolymer of propylene.

7. Synthetic paper as claimed in claim 4, comprising a coated layer on said co-extruded layer, said coated layer comprising a copolymer of styrene and maleic anhydride, silica and carboxymethyl cellulose.

8. Synthetic paper as claimed in claim 7, comprising said copolymer of styrene and maleic anhydride present in the amount of 10 to 30% by wt. of the coated layer, silica present in the amount of 5 to 20% by wt. and carboxymethyl cellulose present in the amount of 1 to 5% by wt.

9. A process for the preparation of a synthetic paper as claimed in any one of the preceding claims wherein the co-extruded sheet is subjected to biaxial orientation so as to form voids on the sheet and imparting mechanical strength and dimensional stability to the synthetic paper.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1 384 556 (MITSUBISHI PETROCHEMICAL COMPANY LTD)<br>* page 2, line 4 - page 6, line 67; claims 1,3,6,11,12,16-28; examples 1,16-18; tables 2A,2B * | 1-3 | B32B27/20<br>B32B27/32 |
| A | * page 18, line 1 - page 19, line 33 *<br>--- | 4,9 | |
| X | FR-A-2 093 986 (K. K. OJI YUKA GOSEISHI KENKYUJO)<br>* page 3, line 10 - page 11, line 22; claims 1-9; examples 2-4 *<br>--- | 1,2,9 | |
| A | GB-A-1 341 630 (TOYO BOSEKI K. K.)<br>* page 1, line 54 - page 4, line 28; claims 1-4,7,9-14; examples 1,20-26,28-34 *<br><br>--- | 1,3-5,9 | |
| A | US-A-4 086 317 (Y. MIYABE)<br>* column 3, line 15 - column 7, line 25; claims 1-3,8; example 1 * | 1-4,7-9 | |
| | ----- | | TECHNICAL FIELDS SEARCHED (Int. Cl.5 )<br><br>B32B |

The present search report has been drawn up for all claims

| Place of search | Date of completion of the search | Examiner |
|---|---|---|
| THE HAGUE | 20 AUGUST 1993 | BLASBAND I. |